# FASCICULE DE BREVET EUROPEEN

(11) **EP 3 749 921 B1**
(45) Date de publication et mention de la délivrance du brevet: **02.06.2021**
(21) Numéro de dépôt: 19730189.8
(22) Date de dépôt: 29.04.2019
(51) Int. Cl.: G01B 11/25

(54) **DISPOSITIF ET PROCÉDÉ DE MESURE TOPOGRAPHIQUE**
VORRICHTUNG UND VERFAHREN ZUR TOPOGRAPHISCHEN MESSUNG
TOPOGRAPHIC MEASUREMENT DEVICE AND METHOD

(30) Priorité: 27.04.2018 FR 1853760
(43) Date de publication de la demande: 16.12.2020
(73) Titulaire: INSIDIX, 38180 Seyssins (FR)
(72) Inventeur: VERNHES, Pierre, 38410 Saint Martin d'Uriage (FR); JACQUET, Cyrille, 38610 Gieres (FR); BRAISAZ, Régis, 38140 Reaumont (FR); TOUSSAINT, Pierre-Louis, 38100 Grenoble (FR)
(74) Mandataire: Talbot, Alexandre
(86) Numéro de dépôt international: PCT/FR2019/050999
(87) Numéro de publication internationale: WO 2019/207267

(56) Documents cités:
- WO-A1-2013/175590
- WO-A1-2014/023332
- US-A1- 2003 025 890
- US-A1- 2006 023 226
- US-A1- 2008 055 583

## Description

### Domaine technique de l'invention

La présente invention a trait à un dispositif de mesure de topographie d'une surface d'un échantillon.

### État de la technique

Afin de mieux connaître les possibles défaillances d'un circuit électronique et plus généralement d'un système électronique, il est particulièrement avantageux d'analyser et de quantifier ses évolutions topographies à différentes températures et notamment lors d'une rampe en température. Cela permet notamment de déterminer quelles sont les zones les plus contraintes et qui sont amenées à se déformer lors des multiples évolutions de température que connaît un circuit électronique au cours de sa fabrication et de son utilisation.

Le document US 2008/055583 A1 décrit un dispositif de mesure de topographie d'une surface d'un échantillon en fonction de la température.

La mesure de topographie de surface conduit classiquement à soumettre le système électronique à un profil de température compris entre -60°C et 300°C. A titre d'exemple, la vitesse de variation de température est de l'ordre de ± 3°C/s. La mesure de topographie de surface doit s'effectuer idéalement de manière continue, c'est-à-dire sans attendre l'établissement de l'équilibre thermique après chaque variation de température, et ce afin de réduire la durée de l'opération et de simuler le profil de température le plus proche de la réalité. De manière classique, un échantillon est soumis à une rampe de température et l'évolution de sa topographie est mesurée régulièrement au cours du temps, c'est-à-dire à différentes températures. Pour quantifier le plus précisément possible l'évolution de la topographie de l'échantillon, il est connu de réaliser une première rampe en température dans laquelle l'intégralité de la zone d'intérêt de l'échantillon est observée afin de connaître le comportement global de la zone d'intérêt.

Lors de la rampe en température, un projecteur émet une séquence de motifs qui sont projetés sur l'échantillon à mesurer. Une caméra acquiert une image de chaque motif qui se trouve déformé sur la surface de la pièce à mesurer. Un algorithme de traitement d'images permet de calculer l'altitude qui correspond à la portion de l'échantillon en cours d'observation par la caméra. L'analyse est réalisée pixel par pixel. Il est alors possible d'obtenir une topographie de surface de l'échantillon en cours de mesure.

Selon la taille de la pièce à observer, il est connu d'ajuster le type de la caméra ainsi que l'optique du projecteur pour que ce dernier projette une image qui couvre toute la zone à mesurer. L'intersection du cône d'observation par la caméra et du cône d'illumination depuis le projecteur permet de déterminer un volume dans l'espace. Ce volume correspond au volume maximal mesurable. En pratique, ce volume maximal est beaucoup plus restreint car il est également nécessaire que l'image fournie par le projecteur ainsi que l'image récupérée par la caméra soient nettes. Il est également nécessaire que l'algorithme de traitement d'image soit en mesure de reconnaître la géométrie et les paramètres optiques utilisés. Il est donc particulièrement important de bien calibrer les caractéristiques optiques du projecteur avec celles de la caméra.

Pour réaliser des mesures successives avec des résolutions en Z différentes, le dispositif de mesure doit être partiellement démonté afin de modifier l'optique de la caméra et l'optique du projecteur. Cette modification du dispositif de mesure permet, par exemple, de réduire la surface de la zone d'analyse à une portion de l'échantillon et d'augmenter la résolution de la mesure. L'échantillon est réintroduit dans le dispositif de mesure, avant ou après la calibration des nouveaux optiques par rapport à la platine qui supporte l'échantillon. L'échantillon est de nouveau soumis à la rampe de température et une portion de la zone d'intérêt est analysée. Ces opérations sont répétées à chaque fois qu'il est nécessaire de changer la résolution de la mesure ce qui nécessite de changer les optiques de la caméra et du projecteur.

Il en résulte que la mesure des différentes configurations recherchées pour quantifier raisonnablement un échantillon est relativement longue. Par ailleurs, l'échantillon est soumis à plusieurs rampes en température ce qui peut fausser la comparaison des résultats successifs.

### Objet de l'invention

Un objet de l'invention consiste à remédier à ces inconvénients, et à prévoir un dispositif de mesure topographique permettant de mesurer différentes résolutions en Z plus rapidement.

On tend vers cet objet, qui est décrit dans la revendication 1, au moyen d'un dispositif de mesure de topographie d'une surface d'un échantillon comportant :
- au moins un projecteur configuré pour émettre une lumière structurée destinée à être pour projetée sur la surface de l'échantillon,
- au moins une caméra configurée pour observer ladite lumière structurée projetée à la surface de l'échantillon,
- un dispositif de chauffage ou de refroidissement configuré pour appliquer une rampe de température à l'échantillon dans l'enceinte,
Le dispositif de mesure est remarquable en ce qu'il comporte :
- un premier dispositif optique disposé selon l'axe optique du projecteur entre le projecteur et l'échantillon, le premier dispositif optique présentant plusieurs grossissements différents au moyen de plusieurs premières lentilles distinctes, les premières lentilles étant montées mobiles les unes par rapport aux autres afin de fournir différentes résolutions de la lumière structurée,
- un deuxième dispositif optique disposé selon l'axe optique de la caméra entre la caméra et l'échantillon, le deuxième dispositif optique présentant plusieurs grossissements différents au moyen de plusieurs deuxièmes lentilles distinctes, les deuxièmes lentilles étant montées mobiles les unes par rapport aux autres afin de fournir différentes résolutions de la caméra.

Selon l'invention, le dispositif de mesure comporte une enceinte destinée à recevoir l'échantillon. Le dispositif de chauffage ou de refroidissement est configuré pour moduler la température à l'intérieur de l'enceinte. Le projecteur, la caméra et les premier et deuxième dispositifs optiques sont disposés hors de l'enceinte.

Selon l'invention:
- le premier dispositif optique comporte un moteur configuré pour modifier la lentille active parmi les premières lentilles,
- le deuxième dispositif optique comporte un moteur configuré pour modifier la lentille active parmi les deuxièmes lentilles,
- un circuit de commande est connecté au premier dispositif optique et au deuxième dispositif optique et configuré pour changer la lentille active parmi les premières lentilles et pour changer la lentille active parmi les deuxièmes lentilles en réponse à une instruction d'un utilisateur, le circuit de commande étant configuré pour faire évoluer les grossissements des premières et deuxièmes lentilles actives de la même manière.

Préférentiellement, le premier dispositif optique comporte une pluralité de premières lentilles présentant des distances focales différentes les unes par rapport aux autres. Le dispositif de mesure comporte un moyen de déplacement du premier dispositif optique selon l'axe optique du projecteur selon une pluralité de positions différentes prédéfinies. Le circuit de commande est configuré pour disposer le premier dispositif optique à une position prédéfinie telle qu'un point focal de la lentille active des premières lentilles soit disposé à la surface de l'échantillon.

Dans un mode de réalisation avantageux, le deuxième dispositif optique comporte une pluralité de deuxièmes lentilles configurées pour présenter des distances focales différentes les unes par rapport aux autres. Le dispositif de mesure comporte un moyen de déplacement du deuxième dispositif optique selon l'axe optique de la caméra selon une pluralité de positions différentes prédéfinies. Le circuit de commande est configuré pour disposer le deuxième dispositif optique à une position prédéfinie telle qu'un point focal de la lentille active des deuxièmes lentilles soit disposé à la surface de l'échantillon.

Dans un autre développement, la caméra, le projecteur, le premier dispositif optique et le deuxième dispositif optique sont montés sur un déplaceur configuré pour déplacer simultanément le premier dispositif optique avec le projecteur et/ou le deuxième dispositif optique avec la caméra selon une direction ou deux directions distinctes parallèles à la surface de l'échantillon.

Il est encore avantageux de prévoir un dispositif de mesure qui comporte une soufflante configurée pour appliquer un flux de gaz à la surface externe d'une paroi transparente de l'enceinte, l'axe optique du projecteur et l'axe optique de la caméra traversant la paroi transparente.

L'invention a également pour objet un procédé de mesure, qui est décrit dans la revendication 7 et qui est plus rapide que les procédés de l'art antérieur car il permet de réaliser des mesures avec des résolutions en Z différentes lors d'une rampe en température.

Le procédé de mesure d'un échantillon est remarquable en ce qu'il comporte :
- fournir un échantillon,
- appliquer un premier gradient thermique à l'échantillon, l'échantillon ayant une température qui évolue depuis une première température jusqu'à une deuxième température différente de la première température,
- projeter une lumière structurée à la surface de l'échantillon au moyen d'un projecteur et d'un premier dispositif optique appliquant au moins un premier grandissement,
- observer ladite lumière structurée projetée à la surface de l'échantillon au moyen d'une caméra et d'un deuxième dispositif optique appliquant au moins un deuxième grandissement.

Selon l'invention, durant la rampe de température, le premier dispositif optique modifie la valeur du premier grandissement et le deuxième dispositif optique modifie la valeur du deuxième grandissement pour modifier la dimension du champ de vue et la résolution perpendiculairement à la surface de l'échantillon.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 et 2 représentent, de manière schématique, deux vues en perspectives d'un mode de réalisation d'un dispositif de mesure selon l'invention,
- la figure 3 représente, de manière schématique, une vue de côté d'un dispositif de mesure selon l'invention,
- la figure 4 représente, de manière schématique, une vue de face d'un dispositif de mesure selon l'invention,
- la figure 5 représente, de manière schématique, une vue de dessus d'un dispositif de mesure selon l'invention,
- la figure 6 représente, de manière schématique, une vue de dos d'un dispositif de mesure selon l'invention,
- la figure 7 représente, de manière schématique, une vue de côté d'un autre mode de réalisation d'un dispositif de mesure selon l'invention,
- la figure 8 représente, de manière schématique, une vue en perspective d'un mode de réalisation d'un dispositif de mesure selon l'invention.

### Description d'un mode de réalisation préférentiel de l'invention

Le dispositif de mesure est un dispositif de mesure de topographie d'une surface d'un système également appelé échantillon.

Un tel dispositif de mesure est principalement utilisé pour étudier la fiabilité et les modes de défaillance du système. Par « surface », on entend la partie extérieure du système qui circonscrit le volume occupé par celui-ci. La surface peut donc être à 3 dimensions. On ne se limite donc pas à la définition mathématique de « surface » qui est une entité à 2 dimensions.

Le système peut appartenir à différents domaines techniques. A titre d'exemples non limitatifs, on peut citer l'électronique, en particulier la microélectronique, l'automobile, l'aérospatiale, le secteur médical. Dans le domaine de la microélectronique, le système peut être par exemple une tranche semi-conductrice (« *wafer»* en langue anglaise), un connecteur, un support (« *socket* » en langue anglaise), un circuit imprimé, un carré (« *die* » en langue anglaise) de circuit imprimé, une matrice de billes (« *Bail Grid Array-*BGA- » en langue anglaise), l'encapsulation d'un circuit imprimé (« *Package on package -* PoP- » en langue anglaise)

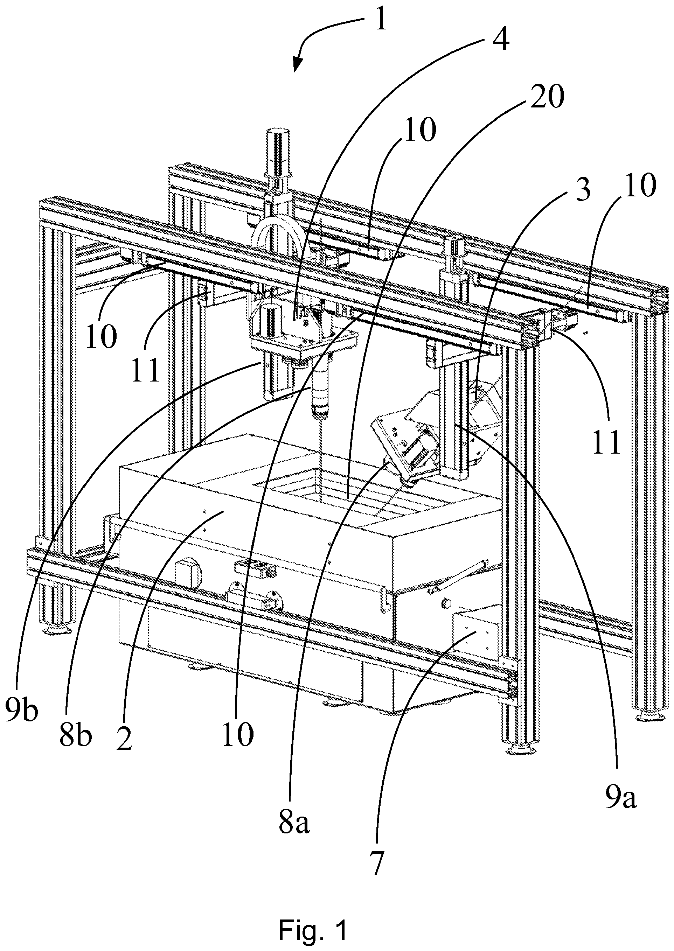

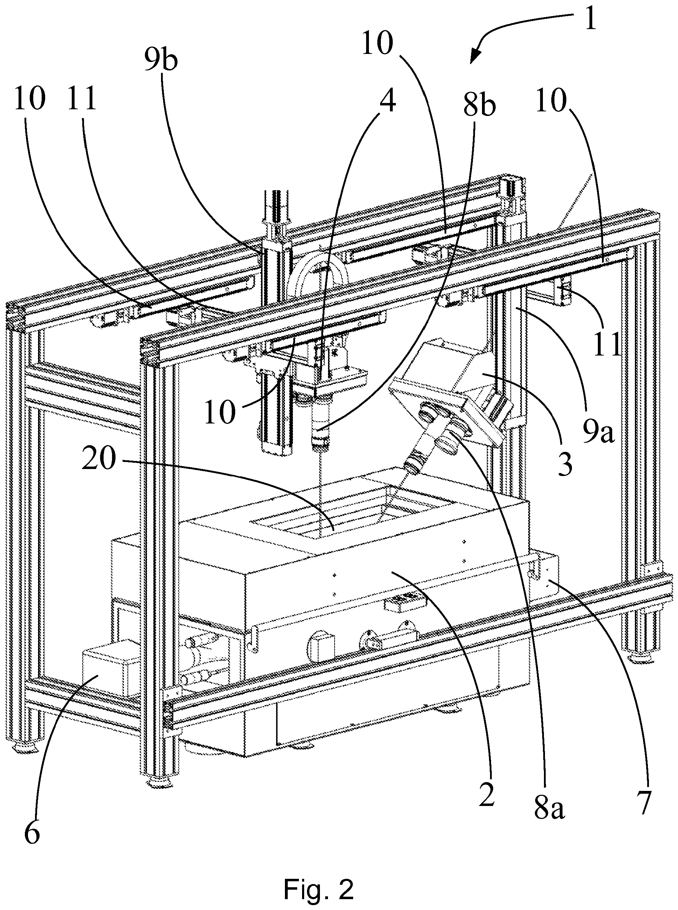

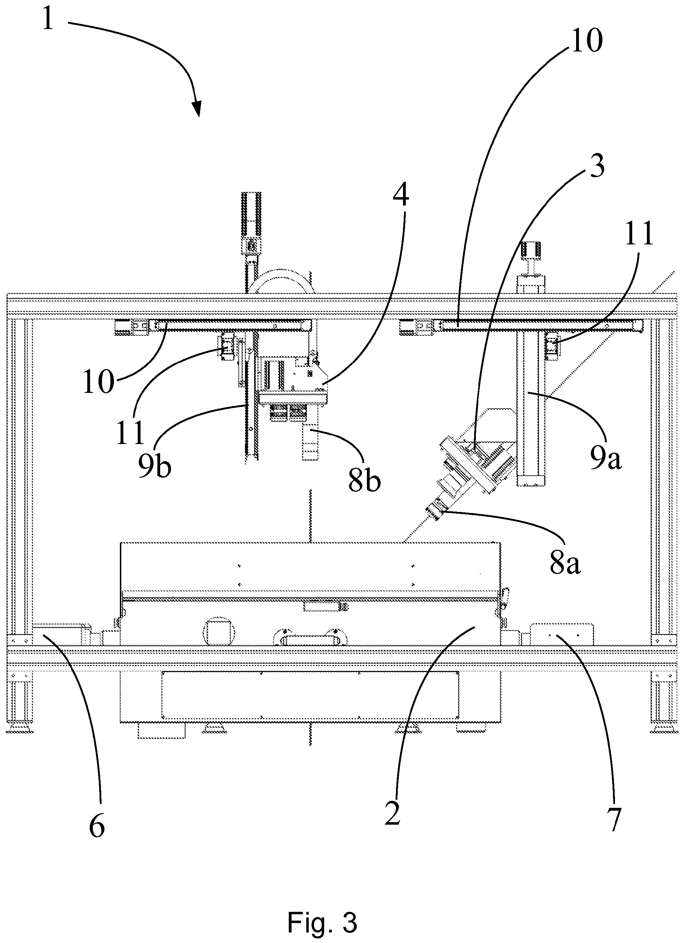

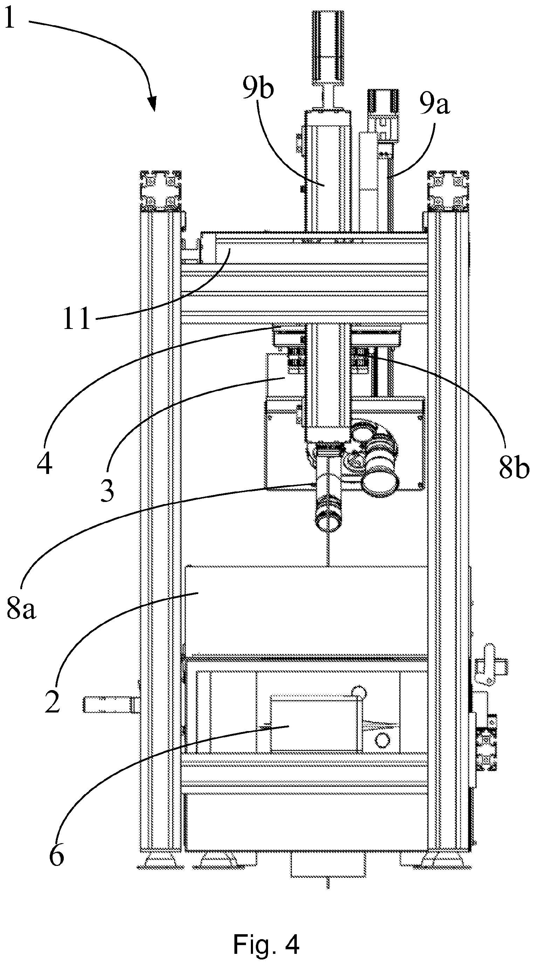

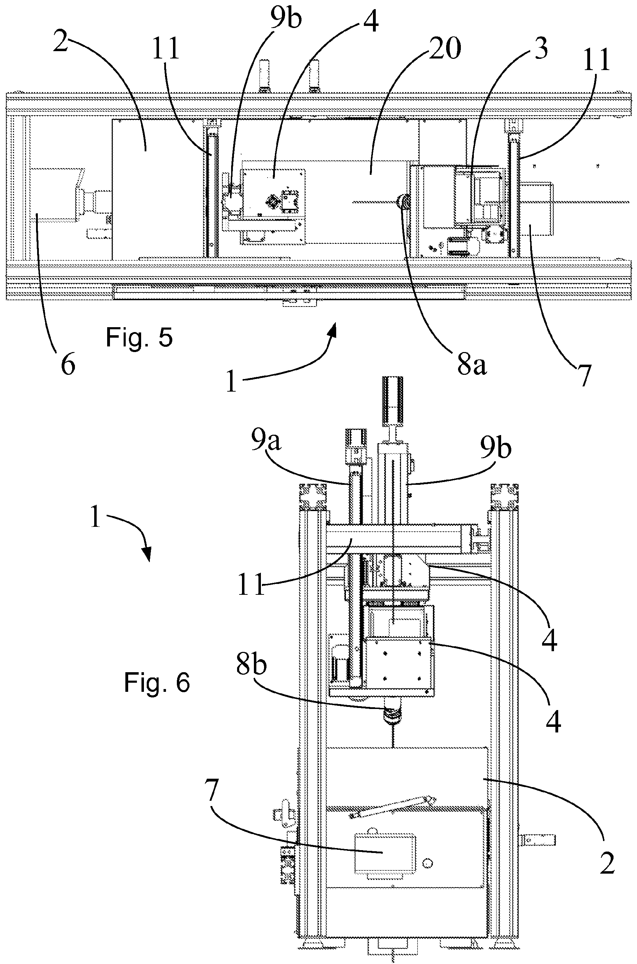

Le dispositif 1 illustré aux figures 1 à 8 est un dispositif 1 de mesure de topographie d'une surface d'un échantillon (non illustré), le dispositif 1 comportant :
- une enceinte 2 adaptée pour recevoir le système, l'enceinte 2 comprenant une partie transparente 20 dans le domaine visible,
- des moyens de chauffage agencés dans et/ou hors de l'enceinte 2 pour chauffer l'échantillon,
- des moyens de projection agencés hors de l'enceinte 2 pour projeter une lumière structurée dans le domaine visible à la surface du système et à travers la partie transparente 20 de l'enceinte 2, les moyens de projection comportant au moins un projecteur 3,
- des moyens de capture d'image agencés hors de l'enceinte 2 pour capturer la lumière structurée réfléchie par la surface du système et se propageant à travers la partie transparente 20 de l'enceinte 2. Les moyens de capture d'image comportant au moins une caméra 4.

L'enceinte 2 du dispositif 1 comporte au moins une paroi interne séparant l'intérieur de l'enceinte comportant l'échantillon et l'extérieur de l'enceinte où sont installés les moyens de projection et moyens de capture d'image.

La partie transparente 20 de l'enceinte 2 comporte avantageusement :
- une première surface vitrée à travers laquelle est projetée la lumière structurée,
- une seconde surface vitrée à travers laquelle se propage la lumière structurée réfléchie par la surface du système.

Les moyens de projection comportent avantageusement un projecteur 3 agencé hors de l'enceinte 2 pour projeter la lumière structurée dans le domaine visible à la surface du système et à travers la partie transparente 20 de l'enceinte 2, plus précisément à travers la première surface vitrée de l'enceinte 2.

La lumière structurée forme avantageusement un réseau de franges de moiré. Dans un mode de réalisation, le projecteur émet directement un réseau de franges de moiré. Dans une variante de réalisation, la lumière structurée est formée au moyen d'un masque qui est traversé par la lumière provenant du projecteur. Le masque comporte des ouvertures et des zones opaques, par exemple sous la forme d'un réseau de Ronchi. Il est également possible de combiner ces deux techniques.

Les moyens de capture d'image comportent avantageusement une caméra 4 agencée hors de l'enceinte 2 pour capturer la lumière structurée réfléchie par la surface du système et se propageant à travers la partie transparente 20 de l'enceinte 2, plus précisément à travers la seconde surface vitrée de l'enceinte 2. La caméra 4 est adaptée pour fournir les mesures de topographie de la surface du système à partir de la lumière structurée capturée.

Le dispositif 1 comporte avantageusement des moyens de chauffage et/ou de refroidissement qui sont configurés pour moduler la température de l'échantillon depuis une première température vers une deuxième température différente de la première température. Les moyens de chauffage et/ou de refroidissement sont configurés pour appliquer au moins une rampe en température à l'échantillon. Lors d'une étape de chauffage, la première température est inférieure à la deuxième température. Lors d'une étape de refroidissement, la première température est supérieure à la deuxième température.

Il est également possible de prévoir que les moyens de chauffage et/ou de refroidissement comportent des moyens d'injection agencés pour injecter un fluide à l'intérieur de l'enceinte 2. Le fluide peut être chauffé préalablement à son introduction dans l'enceinte 2 afin de chauffer l'échantillon. Il est également possible de refroidir le fluide préalablement à son introduction dans l'enceinte 2 afin de refroidir l'échantillon.

Pour refroidir l'échantillon, le fluide est avantageusement de l'air ou de l'azote liquide. Le fluide est avantageusement à température ambiante, par exemple entre 20°C et 30°C ou réfrigéré par exemple à une température inférieure à - 80°C. Pour chauffer l'échantillon, le fluide est avantageusement de l'air ou un gaz neutre tel que de l'azote ou de l'argon.

Le dispositif de mesure peut comporter des moyens d'expulsion agencés pour expulser un fluide hors de l'enceinte 2.

Les moyens d'injection comportent avantageusement :
- des ventilateurs 6 et 7 agencés pour injecter de l'air à température ambiante à l'intérieur de l'enceinte 2,
- des distributeurs de fluide agencés pour distribuer l'air injecté par les ventilateurs 6 et 7 à l'intérieur de l'enceinte 2.

Les distributeurs de fluide comportent avantageusement plusieurs séries d'orifices ménagés en leur sein agencées pour diriger l'air des ventilateurs 6 selon différentes directions de manière à homogénéiser le chauffage et le refroidissement à l'intérieur de l'enceinte 2.

La vitesse de variation en température pour le refroidissement peut être de l'ordre de -3°C/s pour des températures supérieures à 120°C. Les moyens d'expulsion comportent avantageusement un conduit principal comprenant deux conduits secondaires. Chaque conduit secondaire présente une première extrémité débouchant dans le conduit principal, et une seconde extrémité débouchant dans une hotte présente dans l'enceinte 2.

Les moyens de chauffage sont avantageusement des moyens de chauffage infrarouge. Les moyens de chauffage infrarouge comportent avantageusement des lampes à infrarouge. Les moyens de chauffage infrarouge sont agencés à l'intérieur de l'enceinte 2 de manière à améliorer l'homogénéité thermique dans l'enceinte 2. Plus précisément, les lampes à infrarouge sont destinées à être agencées sous le système. Les moyens de chauffage infrarouge comportent avantageusement des lampes à infrarouge montées sur la hotte. Les lampes à infrarouge sont destinées à être agencées au-dessus du système. Les moyens de chauffage infrarouge sont avantageusement adaptés pour chauffer le système jusqu'à une température de 400°C. Les moyens d'injection et les moyens d'expulsion sont avantageusement adaptés pour refroidir le système jusqu'à une température de -60°C.

Il apparaît qu'un tel dispositif de mesure est particulièrement pratique pour mesurer la déformation d'un échantillon. Cependant, par définition, un échantillon n'est pas isotrope et son comportement évolue selon les endroits de sorte qu'il est particulièrement intéressant de connaître et quantifier l'évolution de la déformation de l'échantillon dans sa globalité ainsi que l'évolution de l'échantillon au niveau d'une ou plusieurs zones précises, de préférence avec des résolutions en Z différentes.

Il est donc particulièrement avantageux de pouvoir mesurer différentes surfaces de l'échantillon afin de pouvoir discriminer l'évolution de la topographie pour tout le système et l'évolution de la topographie pour une zone plus spécifique. Il est alors possible d'identifier qu'une zone spécifique possède un comportement différent du reste du système et identifier une éventuelle zone de défaillance privilégiée.

Pour un capteur formé par un couple caméra 4 et projecteur 3, la résolution selon les axes X et Y dépend du grandissement défini par l'optique de la caméra ainsi que dans une moindre mesure du grandissement défini par l'optique du projecteur 3. Il apparaît également que la résolution selon Z dépend principalement du grandissement de l'optique associé au projecteur 3.

Les inventeurs ont observé que le grandissement de l'optique associée au projecteur 3 permet de déterminer la finesse des motifs projetés et donc de définir la résolution selon l'axe Z. Il apparaît que la résolution de la caméra 4 dépend du champ de mesure, c'est-à-dire de la surface observée par la caméra 4 et de la surface éclairée par le projecteur 3. L'axe Z correspond à la perpendiculaire à la surface du porte-échantillon ce qui correspond l'axe optique de la caméra ou sensiblement à l'axe optique de la caméra 4.

Afin d'améliorer l'ergonomie du dispositif de mesure 1, les inventeurs proposent de fournir un dispositif de mesure qui possède plusieurs champs de mesure différents afin de définir des configurations proposant des résolutions différentes selon l'axe Z.

La caméra 4 possède une résolution définie par son capteur qui transforme une information lumineuse en une information électrique. En choisissant judicieusement l'optique placée entre l'échantillon et le capteur, il est possible de définir la zone d'analyse et la quantité d'informations à traiter en sortie de la caméra pour quantifier cette zone d'analyse.

Il est également judicieux d'adapter l'optique qui se trouve entre le projecteur de lumière structurée et l'échantillon afin d'adapter la distance entre les franges et l'épaisseur des franges pour définir la résolution en Z maximale autorisée par le projecteur 3.

Afin de faciliter l'analyse d'un échantillon, il est particulièrement avantageux d'adapter la résolution du réseau de franges présent dans la lumière structurée à la résolution de la caméra.

Les inventeurs proposent d'utiliser un premier dispositif optique disposé selon l'axe optique du projecteur 3 de manière à modifier l'image émise par le projecteur 3 et appliquer cette image sur la surface de l'échantillon à tester. Le premier dispositif optique comporte une pluralité de premières lentilles distinctes. Les multiples premières lentilles présentent des grossissements différents ce qui permet de projeter l'image à observer et analyser sur une portion plus ou moins importante de l'échantillon avec des caractéristiques de franges différentes. De cette manière, en modifiant la lentille active du jeu de premières lentilles, il est possible d'éclairer tout l'échantillon ou uniquement une partie plus ou moins importante de l'échantillon.

Lorsque le projecteur 3 émet directement la lumière structurée, la modification du grossissement appliqué par le premier dispositif optique permet de modifier les caractéristiques du réseau de la lumière structurée, c'est-à-dire le pas de répétition entre les franges et la largeur des franges. La modification du grossissement permet de modifier simplement la résolution de la lumière structurée sans devoir modifier le projecteur 3 ce qui facilite la réalisation et l'utilisation du projecteur. Cette configuration permet d'avoir un projecteur plus stable et d'augmenter la répétabilité des mesures car les caractéristiques de la lumière structurée en sortie immédiate du projecteur 3 ne changent pas.

Le dispositif de mesure comporte avantageusement un deuxième dispositif optique disposé selon l'axe optique de la caméra 4 de manière à modifier la dimension de la zone observée par la caméra sur la surface de l'échantillon à tester. Le deuxième dispositif optique comporte une pluralité de deuxièmes lentilles distinctes et qui présentent des grossissements différents.

La modulation du grossissement appliqué par le deuxième dispositif optique permet de modifier la résolution de la caméra 4 de manière à s'adapter à la résolution de la lumière structurée.

De cette manière, en modifiant le jeu de deuxièmes lentilles, il est possible d'observer tout l'échantillon ou uniquement une partie de l'échantillon. Il est particulièrement avantageux d'adapter la dimension de la zone observée à la dimension de l'image qui est projetée sur l'échantillon. En effet, il est très difficile de récupérer une information exploitable si la caméra 4 est configurée pour observer une zone dépourvue de l'image projetée par le projecteur 3. Cela nécessite un travail supplémentaire de traitement de l'image. Il est donc particulièrement avantageux d'analyser une image complète au lieu d'une portion d'image.

Le premier dispositif optique et le deuxième dispositif optique possèdent chacun des jeux de lentilles qui sont configurés mobiles les uns par rapport aux autres et qui sont chacun actionnés par un moteur de sorte que le basculement d'une première ou deuxième lentille à une autre soit automatisé et indexé. Il est alors possible de changer rapidement le grossissement appliqué par le projecteur 3 ainsi que le grossissement appliqué par la caméra 4 sans avoir à ouvrir le dispositif de mesure et modifier les flux thermiques sur la paroi externe de l'enceinte 2 ce qui peut modifier la température de l'enceinte 2 et donc modifier la rampe de température appliqué sur l'échantillon ou sur une partie de l'échantillon.

Cette configuration évite également de devoir placer l'enceinte dans une gamme de température qui est compatible avec la manutention des optiques par un opérateur. Par exemple, si la température de l'enceinte est supérieure à 60°C, les risques de brulures doivent être pris en compte et l'opérateur doit être équipé spécialement ce qui rend le démontage et le montage d'une nouvelle optique plus compliquée. Il est alors difficile de changer l'optique rapidement. Le problème est identique lorsque l'enceinte est soumise à de faibles températures.

En utilisant différents jeux de lentilles qui sont déjà installés dans le dispositif de mesure 1 et qui sont configurée pour s'installer le long de l'axe optique de la caméra 4 et/ou du projecteur 3, il est possible de gagner un temps précieux en remplaçant simplement une première ou deuxième lentille par une autre.

De manière particulièrement avantageuse, les jeux de lentilles sont configurés pour se déplacer en translation ou en rotation dans un plan perpendiculaire à l'axe optique de la caméra 4 et/ou du projecteur 3. Cette configuration permet une installation rapide et aisée d'un jeu de lentilles. Ceci peut être appliqué pour le premier dispositif optique ainsi que pour le deuxième dispositif optique.

Dans un mode de réalisation particulier, le premier dispositif optique comporte un barillet 8a qui est configuré pour comporter plusieurs premières lentilles différentes. Dans un autre mode de réalisation particulier, le deuxième dispositif optique comporte un barillet 8b qui est configuré pour comporter plusieurs deuxièmes lentilles différentes. Ce mode de réalisation est particulièrement facile à réaliser et permet une indexation aisée des différents jeux de lentilles.

Il est également avantageux de prévoir l'utilisation d'un circuit de commande qui est configuré pour changer la lentille active du jeu de premières lentilles du premier dispositif optique en réponse à une commande utilisateur. Le circuit de commande est également configuré pour changer la lentille active du jeu de deuxièmes lentilles du deuxième dispositif optique lorsque le premier dispositif optique change de grossissement.

Le circuit de commande est relié au premier dispositif optique et au deuxième dispositif optique afin d'engager un changement de grossissement en réponse à une action de l'utilisateur. Le circuit de commande possède une commande utilisateur qui est disposée hors de l'enceinte et hors de l'espace de déplacement de la caméra 4 et du projecteur 3.

De manière avantageuse, le dispositif de mesure définit un volume fermé à l'intérieur duquel se trouve l'enceinte 2, le projecteur 3 et la caméra 4. Les premières et deuxièmes lentilles se déplacent dans ce volume fermé. La console utilisateur se trouve à l'extérieur de ce volume fermé.

De cette manière, une seule action de l'utilisateur permet d'adapter la résolution de la lumière structurée appliquée par le projecteur 3 et la résolution de la caméra 4 destinée à observer la lumière structurée. Les couples de jeux de lentilles étant enregistrés dans le circuit de commande, la performance optique de la caméra 4 est automatiquement adaptée à la performance optique 3 du projecteur 3 ce qui évite les risques d'erreur. Dans un mode de réalisation, le circuit de commande est configuré pour définir un couple particulier d'une lentille du jeu de premières lentilles et d'une lentille du jeu de deuxièmes lentilles. Ainsi, l'utilisateur choisit une surface d'analyse et/ou une résolution en Z et le circuit de commande définit quel couple de première et deuxième lentilles doit être utilisé.

Les positions des différentes lentilles étant enregistrées et indexées, le basculement d'un jeu de lentilles à un autre est plus rapide ce qui facilite la réalisation de plusieurs mesures avec des grossissements différent lors d'une même rampe en température ce qui est impossible avec les dispositifs de l'art antérieur. Les mesures peuvent être réalisées au moyen d'un calculateur.

Dans une configuration particulière, le premier dispositif optique comporte une pluralité de premières lentilles présentant des distances focales différentes les unes par rapport aux autres. Le dispositif de mesure 1 comporte un premier moyen de déplacement 9a qui est configuré pour déplacer le premier dispositif optique selon l'axe optique du projecteur 3 et selon une pluralité de positions prédéfinies. Le circuit de commande est configuré pour disposer le premier dispositif optique à une position prédéfinie telle qu'un point focal du premier jeu de lentilles soit disposé à la surface de l'échantillon. En d'autres termes, la position dans l'espace du projecteur 3 associé au premier dispositif optique par rapport à l'échantillon supporté par le porte-échantillon est pré-enregistrée pour chacune des premières lentilles. Lorsque le circuit de commande modifie la première lentille active, il modifie également sa position dans le dispositif de mesure à une localisation pré-enregistrée. La position est enregistrée préalablement pour chaque première lentille en fonction de ses caractéristiques optiques.

De manière particulièrement avantageuse, le moyen de déplacement 9a du premier dispositif optique est également configuré pour déplacer le projecteur 3 afin que la distance entre le projecteur 3 et le premier dispositif optique soit sensiblement constante pour toutes les premières lentilles. Avec une telle configuration, il est plus facile de placer les premières lentilles du dispositif optique à leur position optimale le long de l'axe optique. Le premier moyen de déplacement 9a est motorisé et la position du premier dispositif optique par rapport à la surface de l'échantillon ou par rapport à la surface du porte-échantillon est enregistrée dans le circuit de commande. Ainsi, lors du choix d'une première lentille, le circuit de commande définit également sa distance par rapport à l'échantillon selon l'axe optique du projecteur 3.

Il en est avantageusement de même pour la caméra 4 et le deuxième dispositif optique qui sont associés à un deuxième moyen de déplacement 9b. Le deuxième moyen de déplacement 9b est motorisé et la position du deuxième dispositif optique par rapport à la surface de l'échantillon ou par rapport à la surface du porte-échantillon est enregistrée dans le circuit de commande. En d'autres termes, la position dans l'espace de la caméra 4 associée au deuxième dispositif optique par rapport à l'échantillon supporté par le porte-échantillon est pré-enregistrée pour chacune des deuxièmes lentilles. Lorsque le circuit de commande modifie la deuxième lentille active, il modifie également sa position dans le dispositif de mesure à une localisation pré-enregistrée. La position est enregistrée préalablement pour chaque deuxième lentille en fonction de ses caractéristiques optiques.

Ainsi, lorsque l'utilisateur décide de modifier la résolution en Z de la mesure, le circuit de commande modifie les premier et deuxième dispositifs optiques et il modifie également leurs positions dans l'espace à l'intérieur du dispositif de mesure.

L'indexation des positions des premier et deuxième dispositifs optiques et donc du projecteur et de la caméra permet d'adapter le volume interne du dispositif de mesure et donc de réduire son encombrement.

Les positions dans l'espace du premier dispositif optique et du deuxième dispositif optique sont préenregistrées à l'intérieur du circuit de commande en fonction du jeu de premières lentilles en cours d'utilisation et du jeu de deuxièmes lentilles en cours d'utilisation. Ainsi, l'image représentative de la lumière structurée est automatiquement nette à la surface de l'échantillon et la caméra 4 récupère également une image nette de la surface de l'échantillon. La mesure de la topographie de surface peut être réalisée plus rapidement car il n'est plus nécessaire de réaliser des étapes de mise au point après chaque changement de grossissement.

Les différentes première et deuxième lentilles sont installées sur le dispositif de mesure avant l'application de la rampe en température ce qui permet de calibrer la position des différents couples première et deuxième lentilles et donc d'enregistrer les positions optimales des lentilles pour réaliser une mesure rapide et de qualité.

Il est particulièrement avantageux d'utiliser une pluralité d'optiques à focale fixe car ces optiques sont plus simples à utiliser et elles permettent d'obtenir un gain de compacité. Cette configuration évite également l'utilisation d'un système muni de zooms qui impose de nombreux compromis techniques avec notamment une limitation de la profondeur de champ et/ou des grossissements accessibles.

Avec une telle configuration, il est possible lors d'une phase de montée en température ou de descente en température de réaliser plusieurs acquisitions en utilisant plusieurs jeux de première et deuxième lentilles différents afin d'acquérir plusieurs mesures avec des résolutions en Z différentes. En d'autres termes, lors d'une montée/descente en température, le premier dispositif optique peut utiliser successivement plusieurs premières lentilles différentes afin d'appliquer plusieurs grossissements de manière consécutive dans le temps. Lors de la rampe en température, le projecteur émet une séquence de motifs qui sont projetés sur l'échantillon à mesurer. La caméra acquiert une image de chaque motif qui se trouve déformé sur la surface de la pièce à mesurer. Un algorithme de traitement d'images permet de calculer l'altitude qui correspond à la portion de l'échantillon en cours d'observation par la caméra. L'analyse est réalisée pixel par pixel. Il est alors possible d'obtenir une topographie de surface de l'échantillon en cours de mesure.

Il est alors possible de mesurer des caractéristiques différentes de l'échantillon lors d'une même phase de montée ou de descente en température. Cette configuration est particulièrement avantageuse lorsque l'échantillon se dégrade au fur et à mesure de l'évolution de la température de sorte que la mesure réalisée sur un échantillon lors d'une première rampe en température soit légèrement différente de la mesure du même échantillon dans les mêmes conditions lors de la rampe en température suivante.

Afin d'avoir un dispositif de mesure 1 ayant une très bonne agilité thermique, c'est-à-dire qui est capable de chauffer et/ou refroidir rapidement un échantillon et ainsi de suivre un profil en température complexe dans le temps, il est préférable de limiter autant que possible le volume de l'enceinte 2 contenant l'échantillon. Il est donc particulièrement avantageux de disposer la caméra 4 et le projecteur 3 hors de l'enceinte.

Pour obtenir une bonne agilité thermique, il est également préférable de limiter autant que possible le nombre d'éléments se trouvant dans l'enceinte et donc la masse thermique de l'enceinte 2. Il est également avantageux de limiter les fonctionnalités du porte-échantillon se trouvant dans l'enceinte afin de réduire sa masse. De manière avantageuse, le porte-échantillon est dépourvu de moyens de déplacement selon les axes X et Y qui sont deux axes perpendiculaires contenus dans un même plan parallèle à la surface supérieure du porte-échantillon et avantageusement horizontal.

Il est également avantageux de prévoir que le porte-échantillon soit dépourvu de moyens de déplacement selon l'axe Z pour limiter la masse thermique du porte-échantillon.

Il est également avantageux d'éviter un mouvement du porte-échantillon lors d'un cycle thermique, par exemple lors d'une phase de montée ou de descente en température car cela entraine une déstabilisation de l'échantillon. Le mouvement du porte-échantillon peut entrainer un changement d'assiette et de position de l'échantillon pendant un cycle thermique. Cette modification de la position de l'échantillon complique fortement le traitement des informations recueillies par la caméra voire rend le traitement impossible et notamment la comparaison des topographies à différentes températures. Il apparaît également que le déplacement de l'échantillon peut entrainer une modification du couplage thermique avec les moyens de chauffage et de refroidissement et donc une difficulté à comparer les différentes de topographie.

Cette configuration est préférable à une solution où le porte-échantillon peut se déplacer selon l'axe Z pour s'adapter à la distance focale de la lentille utilisée en association avec le projecteur 3 et/ou avec la caméra 4. Cette solution offre également une plus grande liberté dans le choix des lentilles utilisables pour former le premier dispositif optique et le deuxième dispositif optique en autorisant un déplacement indépendant des deux dispositifs optiques l'un par rapport à l'autre.

Afin de faciliter la mesure de plusieurs zones différentes de l'échantillon, il est proposé de monter la caméra 4, le projecteur 3, le premier dispositif optique et le deuxième dispositif optique de manière mobile par rapport à l'enceinte 2, au porte-échantillon et donc à l'échantillon, c'est-à-dire mobile à l'intérieur du dispositif de mesure 2.

Cette configuration est particulièrement avantageuse car elle permet de pouvoir réaliser des mesures de l'évolution de la topographie de la surface de l'échantillon dans différentes zones de l'échantillon en déplaçant la caméra 4 et le projecteur 3 sans avoir à déplacer l'échantillon.

Le dispositif 1 comporte avantageusement un déplaceur qui peut être réalisé par un automate configuré pour déplacer le projecteur 3, la caméra 4, le premier dispositif de déplacement et le deuxième dispositif de déplacement dans au moins une première direction et préférentiellement dans des première et deuxième directions sécantes et encore plus préférentiellement perpendiculaires. Il est avantageux de prévoir un déplacement commun du projecteur 3 avec le premier dispositif optique et/ou le déplacement commun de la caméra avec le déplacement du deuxième optique. Le déplaceur est configuré pour réaliser le déplacement des éléments selon les directions X et/ou Y afin de pouvoir observer les différentes portions de l'échantillon avec la résolution en Z choisie. De manière avantageuse, un déplacement en X ou en Y de la caméra entraine un déplacement identique et synchrone du projecteur et inversement.

Dans le mode de réalisation particulier illustré aux figures 1, 2, 3, 4, 5 et 6, il est possible d'observer que le déplaceur soit configuré pour déplacer le projecteur 3, la caméra 4, le premier dispositif optique 8a et le deuxième dispositif optique 8b uniquement selon les directions X et Y au moyen de deux glissières orientées respectivement selon les directions X et Y. Le dispositif de mesure 1 comporte également des glissières orientées selon la direction Z de manière à ce que le point focal du premier dispositif optique ou du deuxième dispositif optique soit disposé à la surface de l'échantillon. L'espace de déplacement autorisé pour le projecteur et la caméra est défini par la structure de support qui comporte les glissières et qui est configuré pour être fermé par une pluralité de capots.

Dans un mode de réalisation particulier, l'automate est configuré pour déplacer le premier dispositif de déplacement et le deuxième dispositif de déplacement dans un plan parallèle au plan du porte-échantillon supportant l'échantillon. Dans un mode de réalisation préférentiel, l'automate est configuré pour déplacer le premier dispositif de déplacement et le deuxième dispositif de déplacement dans un plan horizontal.

L'automate comporte avantageusement des moyens de guidage qui comportent deux premières glissières 10 agencées dans la partie supérieure du dispositif de mesure de part et d'autre de l'enceinte. Les premières glissières 10 s'étendent suivant une première direction Y'-Y. Les premières glissières sont associées à des deuxièmes glissières 11 qui s'étendent suivant une deuxième direction X'-X.

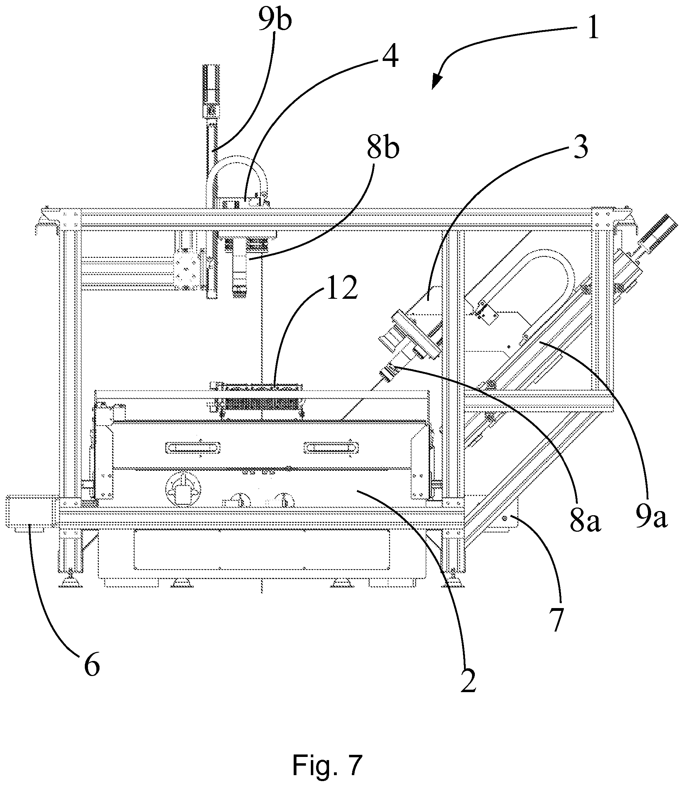

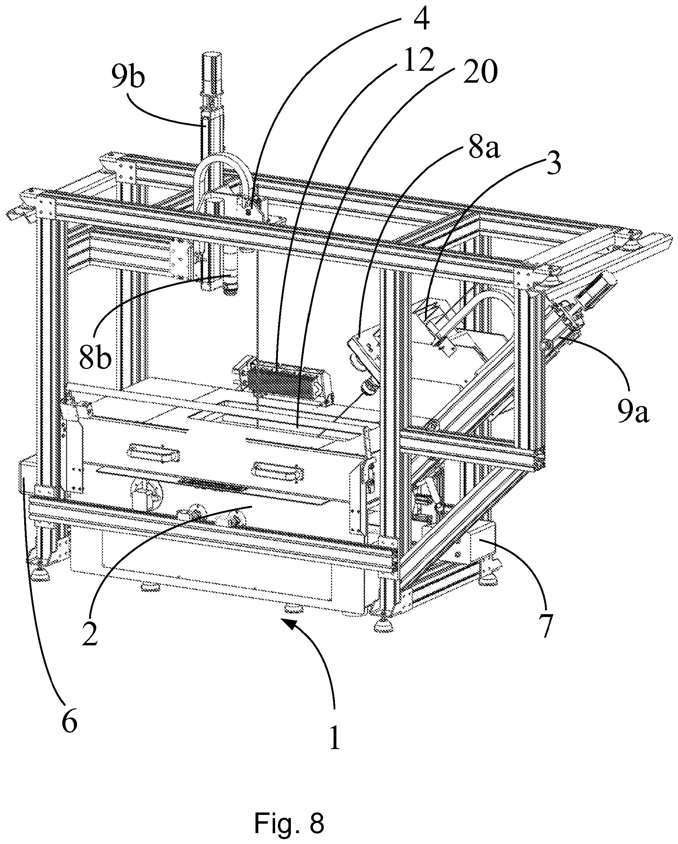

Dans un mode de réalisation avantageux illustré aux figures 7 et 8, une soufflante 12 est montée face à la paroi transparente 20. La soufflante est avantageusement montée sur l'enceinte 2.

La soufflante 12 est montée de manière à envoyer un flux de gaz sur la face externe de la paroi transparente. Les inventeurs ont observé que lorsque l'enceinte 2 se trouve à haute température, la paroi transparente chauffe l'air qui se trouve dans le dispositif de mesure et génère des mouvements aléatoires de l'air. Ces mouvements aléatoires provoquent des flux d'air chaud et d'air plus froid à la surface de la paroi transparente ce qui se traduit par une modification aléatoire de l'indice de réfraction de l'air dans le chemin optique du projecteur 3 et de la caméra 4. La soufflante 12 permet d'homogénéiser l'air se trouvant dans le chemin optique de la caméra 4 et du projecteur 3 pour réduire les perturbations. De manière avantageuse, la soufflante 12 n'est pas configurée pour transformer la paroi transparente qui est une paroi « chaude » en une paroi « froide », c'est-à-dire à température ambiante par exemple entre 20°C et 30°C. Par exemple, lorsque le dispositif de chauffage chauffe l'échantillon, la température de la paroi transparente est supérieure à 60°C lors du fonctionnement de la soufflante. La paroi transparente n'a pas besoin d'être refroidie car le dispositif de mesure est avantageusement refermé par les capots et/ou la génération d'un point froid à la surface de l'enceinte génère des contraintes thermomécaniques avec le reste de l'enceinte non refroidi.

Les inventeurs ont observé que cette modification aléatoire de l'indice de réfraction vient perturber l'image structurée émise par le projecteur avant d'atteindre l'échantillon et vient également perturber l'image captée par la caméra 4. Ces perturbations viennent dégrader la qualité de la mesure.

Une autre solution est d'utiliser une enceinte à paroi externe froide et principalement en ce qui concerne la paroi transparente 2 mais cela représente une solution technologiquement plus complexe et onéreuse.

Il est également intéressant de coupler la soufflante à un dispositif de chauffage, par exemple un chauffage qui peut se présenter sous la forme d'une résistance. Cette configuration permet d'envoyer un air chaud sur la paroi transparente et ainsi éviter la formation d'une fine couche de givre qui pourrait se déposer sur la surface de la paroi transparente lorsque l'enceinte travaille à basse température.

Ces deux dernières solutions technologiques peuvent être appliquées à un dispositif de mesure avec des optiques fixes ou mobiles, ainsi qu'à des porte-échantillons mobiles ou fixes et encore à des dispositifs de mesure dans lequel la caméra et le projecteur sont fixes ou mobiles.

## Revendications

1. Dispositif de mesure de topographie d'une surface d'un échantillon comportant:
• au moins un projecteur (3) configuré pour émettre une lumière structurée destinée à être projetée sur la surface de l'échantillon,
• au moins une caméra (4) configurée pour observer ladite lumière structurée projetée à la surface de l'échantillon et fournir les mesures de topographie de la surface de l'échantillon à partir de la lumière structurée capturée,
• une enceinte (2) destinée à recevoir l'échantillon,
• un dispositif de chauffage ou de refroidissement (6) configuré pour appliquer une rampe de température à l'échantillon dans l'enceinte (2),
dispositif de mesure **caractérisé en ce qu'**il comporte :
• un premier dispositif optique (8a) disposé selon l'axe optique du projecteur (3) entre le projecteur (3) et l'échantillon, le premier dispositif optique (8a) présentant plusieurs grossissements différents au moyen de plusieurs premières lentilles distinctes ayant des grossissements différents, les premières lentilles étant montées mobiles afin de fournir différentes résolutions de la lumière structurée, un premier moteur configuré pour déplacer les premières lentilles dans un plan perpendiculaire à un axe optique du projecteur (3) pour définir une première lentille active disposée selon l'axe optique du projecteur (3) parmi les premières lentilles,
• un deuxième dispositif optique (8b) disposé selon l'axe optique de la caméra (4) entre la caméra (4) et l'échantillon, le deuxième dispositif optique (8b) présentant plusieurs grossissements différents au moyen de plusieurs deuxièmes lentilles distinctes, les deuxièmes lentilles étant montées mobiles afin de fournir différentes résolutions de la caméra (4), un deuxième moteur configuré pour déplacer les deuxièmes lentilles dans un plan perpendiculaire à un axe optique de la caméra (4) pour définir une deuxième lentille active disposée selon l'axe optique de la caméra (4) parmi les deuxièmes lentilles,
• un circuit de commande connecté au premier dispositif optique (8a) et au deuxième dispositif optique (8b) et configuré pour changer la lentille active parmi les premières lentilles et pour changer la lentille active parmi les deuxièmes lentilles en réponse à une instruction d'un utilisateur, le circuit de commande étant configuré pour faire évoluer les grossissement des premières et deuxièmes lentilles actives de la même manière.

2. Dispositif de mesure (1) selon la revendication 1, dans lequel le dispositif de chauffage ou de refroidissement (6) est configuré pour moduler la température à l'intérieur de l'enceinte (2), dispositif de mesure (1) dans lequel le projecteur (3), la caméra (4) et les premier et deuxième dispositifs optiques (8a, 8b) sont disposés hors de l'enceinte (2).

3. Dispositif de mesure (1) selon l'une quelconque des revendications précédentes, dans lequel le premier dispositif optique (8a) comporte une pluralité de premières lentilles présentant des distances focales différentes les unes par rapport aux autres et dans lequel le dispositif de mesure comporte un moyen de déplacement (9a) du premier dispositif optique (8a) selon l'axe optique du projecteur (3) selon une pluralité de positions différentes prédéfinies, le circuit de commande étant configuré pour disposer le premier dispositif optique (8a) à une position prédéfinie telle qu'un point focal de la lentille active des premières lentilles soit disposé à la surface de l'échantillon.

4. Dispositif de mesure (1) selon l'une quelconque des revendications précédentes, dans lequel le deuxième dispositif optique (8b) comporte une pluralité de deuxièmes lentilles configurées pour présenter des distances focales différentes les unes par rapport aux autres et dans lequel le dispositif de mesure (1) comporte un moyen de déplacement (9b) du deuxième dispositif optique (8b) selon l'axe optique de la caméra (4) selon une pluralité de positions différentes prédéfinies, le circuit de commande étant configuré pour disposer le deuxième dispositif optique (8b) à une position prédéfinie telle qu'un point focal de la lentille active des deuxièmes lentilles soit disposé à la surface de l'échantillon.

5. Dispositif de mesure (1) selon l'une quelconque des revendications précédentes, dans lequel la caméra (4), le projecteur (3), le premier dispositif optique (8a) et le deuxième dispositif optique (8b) sont montés sur un déplaceur (10) configuré pour déplacer simultanément le premier dispositif optique (8a) avec le projecteur (3) et/ou le deuxième dispositif optique (8b) avec la caméra (4) selon une direction ou deux directions distinctes parallèles à la surface de l'échantillon.

6. Dispositif de mesure (1) selon l'une quelconque des revendications précédentes, comportant une soufflante (11) configurée pour appliquer un flux de gaz à la surface externe d'une paroi transparente (20) de l'enceinte (2), l'axe optique du projecteur (3) et l'axe optique de la caméra traversant la paroi transparente (20).

7. Procédé de mesure de topographie d'une surface d'un échantillon comportant :
- fournir un échantillon et un dispositif de mesure selon la revendication 1,
- appliquer un premier gradient thermique à l'échantillon, l'échantillon ayant une température qui évolue depuis une première température jusqu'à une deuxième température différente de la première température,
- projeter une lumière structurée à la surface de l'échantillon au moyen d'un projecteur (3) et d'un premier dispositif optique appliquant au moins un premier grandissement,
- observer ladite lumière structurée projetée à la surface de l'échantillon au moyen d'une caméra (4) et d'un deuxième dispositif optique appliquant au moins un deuxième grandissement,
procédé **caractérisé en ce que**, durant la rampe de température,
- le premier dispositif optique modifie la valeur du premier grandissement et le deuxième dispositif optique modifie la valeur du deuxième grandissement pour modifier la dimension du champ de vue et la résolution perpendiculairement à la surface de l'échantillon.

8. Procédé de mesure selon la revendication précédente, dans lequel la modification de grossissement sur le premier dispositif optique et le deuxième dispositif optique est réalisée durant le premier gradient thermique à une température supérieure à 60°C.

## Patentansprüche

1. Vorrichtung zum Messen der Topographie einer Oberfläche einer Probe, umfassend:
• mindestens einen Projektor (3), der konfiguriert ist, um ein strukturiertes Licht zu emittieren, das dazu bestimmt ist, auf die Oberfläche der Probe projiziert zu werden,
• mindestens eine Kamera (4), die konfiguriert ist, um das strukturierte Licht, das auf die Oberfläche der Probe projiziert wird, zu beobachten und um die Topographiemessungen der Oberfläche der Probe ausgehend von dem erfassten strukturierten Licht bereitzustellen,
• einen Behälter (2), der dazu bestimmt ist, die Probe aufzunehmen,
• eine Heiz- oder Kühlvorrichtung (6), die konfiguriert ist, um eine Temperaturrampe an die Probe in dem Behälter (2) anzulegen,
wobei die Vorrichtung zum Messen **dadurch gekennzeichnet ist, dass** sie aufweist:
• eine erste optische Vorrichtung (8a), die entlang der optischen Achse des Projektors (3) zwischen dem Projektor (3) und der Probe angeordnet ist, wobei die erste optische Vorrichtung (8a) mehrere unterschiedliche Vergrößerungen mittels mehrerer erster unterschiedlicher Linsen mit unterschiedlichen Vergrößerungen aufweist, wobei die ersten Linsen beweglich angebracht sind, um unterschiedliche Auflösungen des strukturierten Lichts bereitzustellen, und einen ersten Motor, der konfiguriert ist, um die ersten Linsen in einer Ebene senkrecht zu einer optischen Achse des Projektors (3) zu bewegen, um eine erste aktive Linse, die entlang der optischen Achse des Projektors (3) angeordnet ist, unter den ersten Linsen zu definieren,
• eine zweite optische Vorrichtung (8b), die entlang der optischen Achse der Kamera (4) zwischen der Kamera (4) und der Probe angeordnet ist, wobei die zweite optische Vorrichtung (8b) mehrere unterschiedliche Vergrößerungen mittels mehrerer zweiter unterschiedlicher Linsen aufweist, wobei die zweiten Linsen beweglich angebracht sind, um unterschiedliche Auflösungen der Kamera (4) bereitzustellen, und einen zweiten Motor, der konfiguriert ist, um die zweiten Linsen in einer Ebene senkrecht zu einer optischen Achse der Kamera (4) zu bewegen, um eine zweite aktive Linse, die entlang der optischen Achse der Kamera (4) angeordnet ist, unter den zweiten Linsen zu definieren,
• einen Steuerkreis, der mit der ersten optischen Vorrichtung (8a) und der zweiten optischen Vorrichtung (8b) verbunden ist und konfiguriert ist, um die aktive Linse unter den ersten Linsen zu wechseln und um die aktive Linse unter den zweiten Linsen als Antwort auf eine Anweisung eines Benutzers zu wechseln, wobei der Steuerkreis konfiguriert ist, um die Vergrößerungen der ersten und zweiten aktiven Linsen auf die gleiche Weise zu ändern.

2. Vorrichtung zum Messen (1) nach Anspruch 1, wobei die Heiz- oder Kühlvorrichtung (6) konfiguriert ist, um die Temperatur im Inneren des Behälters (2) zu modulieren, Vorrichtung zum Messen (1), wobei der Projektor (3), die Kamera (4) und die erste und zweite optische Vorrichtung (8a, 8b) außerhalb des Behälters (2) angeordnet sind.

3. Vorrichtung zum Messen (1) nach einem der vorhergehenden Ansprüche, wobei die erste optische Vorrichtung (8a) mehrere erste Linsen aufweist, die voneinander unterschiedliche Brennweiten aufweisen, und wobei die Vorrichtung zum Messen ein Mittel zum Bewegen (9a) der ersten optischen Vorrichtung (8a) entlang der optischen Achse des Projektors (3) gemäß mehreren verschiedenen vordefinierten Positionen aufweist, wobei der Steuerkreis konfiguriert ist, um die erste optische Vorrichtung (8a) an einer derartigen vordefinierten Position anzuordnen, dass ein Brennpunkt der aktiven Linse der ersten Linsen auf der Oberfläche der Probe angeordnet ist.

4. Vorrichtung zum Messen (1) nach einem der vorhergehenden Ansprüche, wobei die zweite optische Vorrichtung (8b) mehrere zweite Linsen aufweist, die konfiguriert sind, um voneinander unterschiedliche Brennweiten aufzuweisen, und wobei die Vorrichtung zum Messen (1) ein Mittel zum Bewegen (9b) der zweiten optischen Vorrichtung (8b) entlang der optischen Achse der Kamera (4) gemäß mehreren verschiedenen vordefinierten Positionen aufweist, wobei der Steuerkreis konfiguriert ist, um die zweite optische Vorrichtung (8b) an einer derartigen vordefinierten Position anzuordnen, dass ein Brennpunkt der aktiven Linse der zweiten Linsen auf der Oberfläche der Probe angeordnet ist.

5. Vorrichtung zum Messen (1) nach einem der vorhergehenden Ansprüche, wobei die Kamera (4), der Projektor (3), die erste optische Vorrichtung (8a) und die zweite optische Vorrichtung (8b) an einem Beweger (10) angebracht sind, der konfiguriert ist, um gleichzeitig die erste optische Vorrichtung (8a) mit dem Projektor (3) und/oder die zweite optische Vorrichtung (8b) mit der Kamera (4) in eine Richtung oder zwei verschiedene Richtungen parallel zu der Oberfläche der Probe zu bewegen.

6. Vorrichtung zum Messen (1) nach einem der vorhergehenden Ansprüche, umfassend ein Gebläse (11), das konfiguriert ist, um einen Gasstrom auf die Außenfläche einer transparenten Wand (20) des Behälters (2) anzuwenden, wobei die optische Achse des Projektors (3) und die optische Achse der Kamera durch die transparente Wand (20) hindurchgehen.

7. Verfahren zum Messen der Topographie einer Oberfläche einer Probe, umfassend:
- Bereitstellen einer Probe und einer Vorrichtung zum Messen nach Anspruch 1,
- Anlegen eines ersten thermischen Gradienten an die Probe, wobei die Probe eine Temperatur aufweist, die sich von einer ersten Temperatur zu einer zweiten Temperatur, die sich von der ersten Temperatur unterscheidet, verändert,
- Projizieren eines strukturierten Lichts auf die Oberfläche der Probe mittels eines Projektors (3) und einer ersten optischen Vorrichtung, die mindestens eine erste Vergrößerung anwendet,
- Beobachten des strukturierten Lichts, das auf die Oberfläche der Probe projiziert wird, mittels einer Kamera (4) und einer zweiten optischen Vorrichtung, die mindestens eine zweite Vergrößerung anwendet,
wobei das Verfahren **dadurch gekennzeichnet ist, dass** während der Temperaturrampe
- die erste optische Vorrichtung den Wert der ersten Vergrößerung ändert und die zweite optische Vorrichtung den Wert der zweiten Vergrößerung ändert, um die Größe des Sichtfeldes und die Auflösung senkrecht zur Oberfläche der Probe zu modifizieren.

8. Verfahren zum Messen nach dem vorhergehenden Anspruch, wobei das Ändern der Vergrößerung an der ersten optischen Vorrichtung und der zweiten optischen Vorrichtung während des ersten thermischen Gradienten bei einer Temperatur von über 60 °C durchgeführt wird.

## Claims

1. Measuring device of the surface topography of a sample comprising:
• at least one projector (3) configured to emit a patterned light designed to be projected onto the surface of the sample,
• at least one camera (4) configured to observe said patterned light projected onto the surface of the sample and provide measurements of the topography of the sample surface from the captured structured light,
• an enclosure (2) designed to receive the sample,
• a heating or cooling device (6) configured to apply a temperature ramp to the sample in the enclosure (2),
measuring device **characterised in that** it comprises:
• a first optic device (8a) located on the optic axis of the projector (3) between the projector (3) and the sample, the first optic device (8a) presenting several different magnifications by means of several distinct first lenses having different magnifications, the first lenses being mounted movable so as to provide different resolutions of the patterned light, a first motor configured to move the first lenses in a plane perpendicular to an optic axis of the projector (3) to define a first active lens located on the optic axis of the projector (3) among the first lenses,
• a second optic device (8b) located on the optic axis of the camera (4) between the camera (4) and the sample, the second optic device (8b) presenting several different magnifications by means of several distinct second lenses, the second lenses being mounted movable so as to provide different resolutions of the camera (4), a second motor configured to move the second lenses in a plane perpendicular to an optic axis of the camera (4) to define a second active lens located on the optic axis of the camera (4) among the second lenses,
• a control circuit connected to the first optic device (8a) and to the second optic device (8b) and configured to change the active lens among the first lenses and to change the active lens among the second lenses in response to a user instruction, the control circuit being configured to modify the magnifications of the first and second active lenses in the same manner.

2. Measuring device (1) according to claim 1, wherein the heating or cooling device (6) is configured to adjust the temperature inside the enclosure (2), measuring device (1) wherein the projector (3), the camera (4) and the first and second optic devices (8a, 8b) are arranged outside the enclosure (2).

3. Measuring device (1) according to any one of the foregoing claims, wherein the first optic device (8a) comprises a plurality of first lenses presenting different focal distances from one another and wherein the measuring device comprises a displacement means (9a) of the first optic device (8a) along the optic axis of the projector (3) with a plurality of different predefined positions, the control circuit being configured to locate the first optic device (8a) in a predefined position such that a focal point of the active lens of the first lenses is located on the surface of the sample.

4. Measuring device (1) according to any one of the foregoing claims, wherein the second optic device (8b) comprises a plurality of second lenses configured to present different focal distances from one another and wherein the measuring device (1) comprises a displacement means (9b) of the second optic device (8b) along the optic axis of the camera (4) with a plurality of different predefined positions, the control circuit being configured to locate the second optic device (8b) in a predefined position such that a focal point of the active lens of the second lenses is located on the surface of the sample.

5. Measuring device (1) according to any one of the foregoing claims, wherein the camera (4), the projector (3), the first optic device (8a) and the second optic device (8b) are mounted on a displacer (10) configured to simultaneously displace the first optic device (8a) with the projector (3) and/or the second optic device (8b) with the camera (4) in one direction or two distinct directions parallel to the surface of the sample.

6. Measuring device (1) according to any one of the foregoing claims, comprising a blower (12) configured to apply a gas flow on the outer surface of a transparent wall (20) of the enclosure (2), the optic axis of the projector (3) and the optic axis of the camera passing through the transparent wall (20).

7. Method for measuring a sample comprising:
- providing a sample and a measuring device according to claim 1,
- applying a first thermal gradient to the sample, the sample having a temperature that changes from a first temperature to a second temperature different from the first temperature,
- projecting a patterned light onto the surface of the sample by means of a projector (3) and a first optic device applying at least a first magnification,
- observing said patterned light projected onto the surface of the sample by means of a camera (4) and a second optic device applying at least a second magnification,
method **characterised in that**, during the temperature ramp,
- the first optic device modifies the value of the first magnification and the second optic device modifies the value of the second magnification to modify the size of the field of view and the resolution perpendicularly to the surface of the sample.

8. Method for measuring according to the previous claim, wherein the modification of the magnification on the first optic device and the second optic device is performed during the first temperature ramp at a temperature of more than 60°C.
